# EUROPÄISCHE PATENTSCHRIFT

(11) **EP 0 535 335 B1**
(45) Veröffentlichungstag und Bekanntmachung des Hinweises auf die Patenterteilung: **01.03.1995**
(21) Anmeldenummer: 92113597.6
(22) Anmeldetag: 10.08.1992
(51) Int. Cl.: B60G 13/06

(54) **Unabhängige Radaufhängung für Kraftfahrzeuge**
Independent wheel suspension for motor vehicles
Suspension de roue indépendante pour véhicules automobiles

(30) Priorität: 30.09.1991 DE 4132457
(43) Veröffentlichungstag der Anmeldung: 07.04.1993
(73) Patentinhaber: Volkswagen Aktiengesellschaft, 38436 Wolfsburg (DE)
(72) Erfinder: Ilsemann, Bernhard, W-3301 Weddel (DE)

(56) Entgegenhaltungen:
- EP-A- 0 118 287
- DE-A- 3 108 482
- DE-A- 3 303 551
- DE-C- 964 930
- US-A- 1 213 797
- US-A- 3 155 382
- REIMPELL "Fahrwerktechnik 1" 3. Auflage, 1976, Vogel-Verlag, Wurzburg, Seite 116
- REIMPELL "Fahrwerktechnik 2" 2. Auflage, 1975, Vogel-verlag, Wurzburg, Seite 197

## Beschreibung

Die Erfindung betrifft eine unabhängige Radaufhängung für Kraftfahrzeuge der im Oberbegriff des Patentanspruchs genannten Art, wie sie allgemein bekannt sind, u. a. z. B. auch aus der DE-31 08 482-C2 und Reimpell: Fahrwerktechnik 1, Vogel-Verlag, 3. Auflage, 1976, Seite 116, Bild 3.4./6.

Bei der Bemessung und räumlichen Anordnung der Teleskop-Stoßdämpfer sind i. a. sehr unterschiedliche Wünsche und Zwänge zu berücksichtigen.

Auf der einen Seite ist man aus Komfortgründen bestrebt, die Teleskop-Stoßdämpfer derart auszubilden und räumlich anzuordnen, daß beim Ein- und Ausfedern der Fahrzeugräder möglichst große Dämpferwege wirksam sind und daß außerdem die hierbei zwangsläufig auftretenden Winkel- bzw. Neigungsänderungen der einerseits am Fahrzeugaufbau und andererseits an den schwingenden Radführungsgliedern angelenkten Teleskop-Stoßdämpfer möglichst gering bleiben. Größere Neigungs- bzw. Winkeländerungen würden nämlich u. U. in den Anlenkstellen der Stoßdämpfer zu Verzwängungen führen, was mit entsprechenden Biegebeanspruchungen der Kolbenstange und damit mit einem entsprechend schlechteren Ansprechverhalten der Teleskop-Stoßdämpfer verbunden wäre.

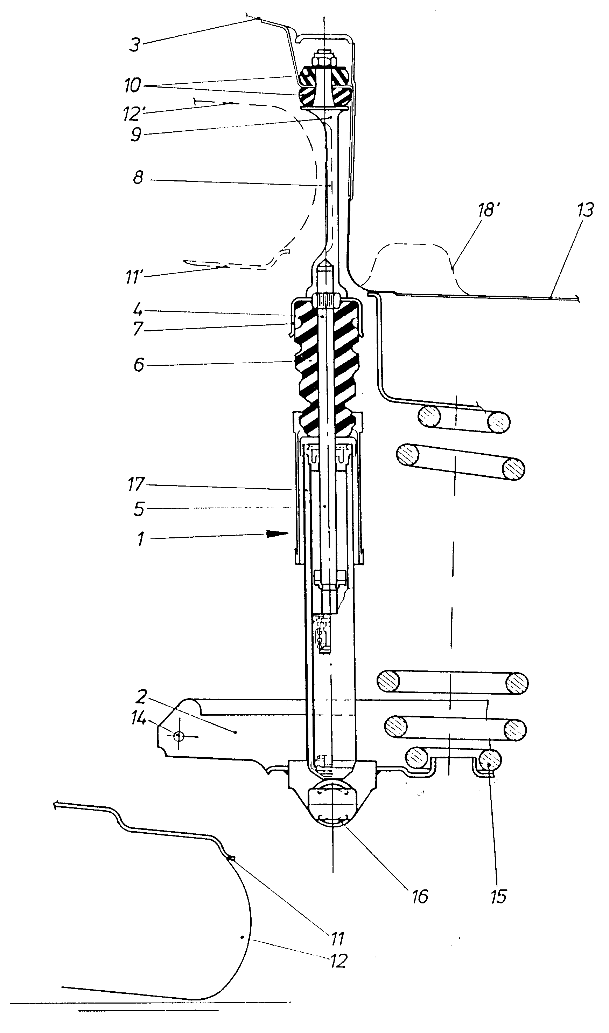

Andererseits bereitet es oft Schwierigkeiten, die Teleskop-Stoßdämpfer in dem noch zur Verfügung stehenden Bauraum unterzubringen, zumal dann, wenn an den aufbauseitigen Kolbenstangenenden noch - z. B. als Teil von Schutzkappen oder als Stützglieder für auf den Kolbenstangen gelagerte elastomere Zusatzfedern - topfförmige Kappen befestigt sind, wie dies heute weit verbreitet ist (z. B. DE-PS 964 930, Abb. 1, Reimpell: Fahrwerktechnik 2, Vogel-Verlag, 2. Auflage, 1975, Seite 197, Bild 7.2./22).

Die Unterbringung der Teleskop-Stoßdämpfer bereitet z. B. dann große Schwierigkeiten, wenn man bestrebt ist, den Fahrgast- oder Laderaum des Fahrzeugs möglichst ungeschmälert, d. h. mit möglichst geringem Einfluß von sonst üblichen Feder- bzw. Stoßdämpfer-Domen auszunutzen. Insbesondere bei den sich zunehmender Beliebtheit erfreuenden sogenannten Kombinationsfahrzeugen ist man daran interessiert, eine möglichst große Durchladebreite zu erhalten.

Bei solchen Fahrzeugen sind daher Radaufhängungen mit stark schräg gestellten und unterflur angeordneten Teleskop-Stoßdämpfern üblich geworden (z. B. DE-31 08 482-C2). Wegen der starken Schrägstellung der unterflur angelenkten Teleskop-Stoßdämpfer kommt es beim Ein- und Ausfedern der Räder natürlich zu starken Neigungsänderungen der Teleskop-Stoßdämpfer, deren bezüglich des Ansprechverhaltens an sich negativen Auswirkungen man versucht, durch eine spezielle Ausrichtung und Bemessung der beidenends angeordneten Stoßdämpfer-Augengelenke zu mildern bzw. zu beseitigen.

Vor diesem Hintergrund liegt der Erfindung die Aufgabe zugrunde, eine unabhängige Radaufhängung der im Oberbegriff des Patentanspruchs genannten Art weiter zu verbessern und insbesondere derart auszubilden, daß einerseits eine vergleichsweise große Durchladebreite des Fahrzeugs realisiert werden kann, andererseits die Teleskop-Stoßdämpfer aber trotzdem ein komfortables Ansprech- und Dämpfungsverhalten aufweisen.

Diese Aufgabe wird erfindungsgemäß durch die Merkmale des Patentanspruchs gelöst.

Anhand eines in der Zeichnung schematisiert dargestellten Ausführungsbeispiels wird die Erfindung nachstehend näher erläutert.

Die einzige Figur der Zeichnung zeigt die unabhängige Aufhängung eines der Räder, z. B. eines der Hinterräder eines Kraftfahrzeuges in Fahrzeuglängsrichtung gesehen, wobei lediglich die für das Verständnis der Erfindung notwendigen Einzelheiten der Radaufhängung und des Teleskop-Stoßdämpfers dargestellt sind. Die Aufhängung des gegenüberliegenden Rades der Achse ist entsprechend spiegelbildlich ausgebildet.

Von der unabhängigen Radaufhängung des Fahrzeugs ist lediglich ein z. B. als üblicher unterer Quer- oder Schräglenker ausgebildetes Radführungsglied 2 angedeutet, dessen aufbauseitige Anlenkung nicht weiter dargestellt ist. Radseitig ist es in üblicher Weise über eine nur angedeutete Kugelgelenkanordnung o. ä. 14 am ebenfalls nicht weiter dargestellten üblichen Radträger (Achsschenkel) des Rades 11 angelenkt. Gegebenenfalls vorhandene oder erforderliche weitere Radführungsglieder, z. B. obere Radführungsglieder, sind nicht weiter dargestellt.

Zur Abfederung des Fahrzeugs sind zwischen dem unteren Radführungsglied 2 und dem Fahrzeugaufbau 3, insbesondere dessen Ladeboden 13 jeweils eine nur angedeutete Schraubenfeder 15 sowie ein davon getrennt angeordneter Teleskop-Stoßdämpfer 1 vorgesehen. Der Teleskop-Stoßdämpfer 1 ist mit seinem behälterseitigen Ende am Radführungsglied 2 angelenkt, im dargestellten Ausführungsbeispiel mittels eines üblichen Augengelenks 16.

Die Kolbenstange 5 ist am Fahrzeugaufbau 3 angelenkt, jedoch nicht wie üblich direkt, sondern unter Zwischenschaltung einer länglichen und in Fahrzeugquerrichtung schmal bemessenen biegesteifen Stützstrebe 8. Diese Stützstrebe 8 ist mit ihrem einen Ende starr, z. B. durch Verschrauben, mit dem freien Ende 4 der Kolbenstange 5 verbunden, an dem auch eine topfförmige Kappe 7 befestigt ist, an der sich eine auf der Kolbenstange 5 gelagerte übliche elastomere Zusatzfeder 6 abstützt, deren anderes Ende stirnseitig am Behälterrohr 17 des Teleskop-Stoßdämpfers 1 anliegt.

Das aufbauseitige Ende 9 der schmalen biegesteifen Stützstrebe 8 ist unter Zwischenschaltung üblicher gummielastischer Elemente 10 am Fahrzeugaufbau 3 angelenkt, und zwar in einem Aufbaubereich, der bei zeichnerisch angedeuteter maximaler Einfederung des Rades 11' noch oberhalb des Reifens 12' liegt.

Die axiale Länge der schmalen biegesteifen Stützstrebe 8 ist dabei derart bemessen, daß die am Kolbenstangenende 4 befestigte topfförmige Kappe 7, deren Außendurchmesser ja noch größer ist als der Außendurchmesser des Behälterrohrs 17 des Teleskop-Stoßdämpfers 1, in einer fiktiven Ebene liegt, die zumindest geringfügig unterhalb des Fahrzeug-Ladebodens 13 verläuft.

Auf diese Weise kann der Ladeboden 13 sehr weit nach außen gezogen werden, wodurch sich eine vergleichsweise große Durchladebreite ergibt. Trotzdem ist der Teleskop-Stoßdämpfer 1 beim Ein- und Ausfedern des Rades 11 nur vergleichsweise kleinen Winkel- bzw. Neigungsänderungen unterworfen, da die hierbei relevante wirksame Abstützlänge des Teleskop-Stoßdämpfers 1 durch den sehr hochgelegten aufbauseitigen Anlenkpunkt der Stützstrebe 8 sehr groß ist.

Strichpunktiert angedeutet sind die Verhältnisse, die vorlägen, wenn das Kolbenstangenende 4 des Teleskop-Stoßdämpfers 1 unmittelbar am Fahrzeugaufbau angelenkt wäre. In diesem Falle ergäbe sich eine domartige Aufnahme 18' für das Kolbenstangenende, wodurch sich nicht nur eine spürbar verringerte Durchladebreite ergäbe, sondern darüber hinaus auch eine erheblich kürzere Abstützlänge für den Teleskop-Stoßdämpfer, so daß dieser beim Ein- und Ausfedern des Fahrzeugrades 1 entsprechend größeren Winkel- bzw. Neigungsänderungen mit allen daraus resultierenden Nachteilen unterworfen wäre.

## Patentansprüche

1. Unabhängige Radaufhängung für Kraftfahrzeuge, mit um mindestens annähernd horizontale Schwenkachsen schwingenden Radführungsgliedern (Lenkern 2) und mit Teleskop-Stoßdämpfern (1), die mit ihren behälterseitigen Enden an den Radführungsgliedern (2) und mit ihren kolbenstangenseitigen Enden am Fahrzeugaufbau (3) angelenkt sind, wobei an den Kolbenstangenenden (4) - als Teil von Schutzkappen oder als Stützglieder für auf den Kolbenstangen (5) gelagerte elastomere Zusatzfedern (6) - topfförmige Kappen (7) befestigt sind,
gekennzeichnet durch folgende Merkmale:
a) Die Kolbenstangenenden (4) sind nicht direkt am Fahrzeugaufbau (3) angelenkt, sondern unter Zwischenschaltung länglicher und in Fahrzeugquerrichtung schmal bemessener biegesteifer Stützstreben (8).
b) Die Stützstreben (8) sind mit ihren aufbauseitigen Enden (9) - vorzugsweise unter Zwischenschaltung üblicher gummielastischer Elemente (10) - in einem bei maximaler Einfederung der Räder (11) noch oberhalb der Reifen (12) liegenden Aufbaubereich angelenkt.
c) Die Länge der Stützstreben (8) ist derart bemessen, daß die an den Kolbenstangenenden (4) befestigten topfförmigen Kappen (7) in einer zumindest geringfügig unterhalb des Fahrzeug-Ladebodens (13) verlaufenden fiktiven Ebene zu liegen kommen.

## Claims

1. Independent wheel suspension for motor vehicles, with wheel guiding members (guide bars 2) pivoting about pivot axes which are at least approximately horizontal and with telescopic shock absorbers (1) which with their ends at the receiver side are articulated on the wheel guiding members (2) and with their ends at the piston rod side are articulated on the motor vehicle body (3), wherein on the piston rod ends (4) - as a part of protective caps or as support members for elastomer auxiliary springs (6) mounted on the piston rods (5) - cup-shaped caps (7) are fixed, characterised by the following features:
a) The piston rod ends (4) are not directly articulated on the vehicle body (3) but by inserting long support struts (8) which are narrow and resistant to bending in the direction transverse to travel.
b) The support struts (8) are articulated with their ends (9) at the body side - preferably by inserting conventional rubber elastic elements (10) - in a body region still lying above the tyres (12) during maximum spring deflection of the wheels (11).
c) The length of the support struts is dimensioned such that the cup-shaped caps (7) fixed on the piston rod ends (4) come to lie in a hypothetical plane which extends at least slightly below the vehicle loading floor (13).

## Revendications

1. Suspension de roue indépendante pour véhicules automobiles, comprenant des éléments de guidage de roue (bras oscillants 2), qui oscillent autour de pivots au moins sensiblement horizontaux, et comprenant des amortisseurs télescopiques (1) dont les extrémités situées côté chambre sont articulées sur les éléments de guidage de roue (2) et dont les extrémités situées côté tige de piston sont articulées sur la carrosserie (3) du véhicule, des capuchons (7) en forme de pots - faisant partie de capuchons de protection ou servant d'éléments d'appui à des ressorts supplémentaires en élastomère (6) montés sur les tiges de pistons (5) - étant fixés à l'extrémité des tiges de pistons, caractérisée en ce que :
a) les extrémités (4) des tiges de pistons ne sont pas articulées directement sur la carrosserie (3) du véhicule, mais en intercalant des jambes d'appui (8) allongées, étroites dans le sens transversal du véhicule et rigides en flexion ;
b) les extrémités (9) situées côté carrosserie des jambes d'appui (8) sont articulées - de préférence en intercalant des éléments classiques (10) ayant l'élasticité du caoutchouc - dans une zone de carrosserie qui, lorsque les roues (11) présentent un débattement maximal en compression, se trouve encore au-dessus des pneus (12) ;
c) la longueur des jambes d'appui (8) est calculée pour que les capuchons (7) en forme de pot, qui sont fixés aux extrémités (4) des tiges de pistons, se trouvent dans un plan fictif qui passe au moins légèrement en dessous du plancher de chargement (13) du véhicule.
